# FASCICULE DE BREVET EUROPEEN

(11) **EP 2 722 963 B1**
(45) Date de publication et mention de la délivrance du brevet: **06.06.2018**
(21) Numéro de dépôt: 13188356.3
(22) Date de dépôt: 11.10.2013
(51) Int. Cl.: H02J 7/00, H01M 10/44, B60L 11/18, H01M 10/052

(54) **SYSTÈME D'ALIMENTATION ÉLECTRIQUE À CAPACITÉ MODULABLE**
STROMZUFÜHRUNGSSYSTEM MIT MODULIERBARER KAPAZITÄT
ELECTRICAL POWER SUPPLY SYSTEM WITH MODULAR CAPACITY

(30) Priorité: 18.10.2012 FR 1259956
(43) Date de publication de la demande: 23.04.2014
(73) Titulaire: Commissariat à l'Énergie Atomique et aux Énergies Alternatives, 75015 Paris (FR)
(72) Inventeur: Desbois-Renaudin, Matthieu, 38250 Villard de Lans (FR); Garnier, Laurent, 69970 Marennes (FR); Lefebvre, Christophe, 38500 Coublevie (FR); Palmieri, Michael, 38000 Grenoble (FR); Thomas, Remy, 38100 Grenoble (FR)
(74) Mandataire: Guérin, Jean-Philippe

(56) Documents cités:
- WO-A1-2012/053426
- DE-A1-102008 060 936
- DE-A1-102010 020 294
- JP-A- 2001 086 662
- JP-A- 2008 118 790
- JP-A- 2009 081 958
- JP-A- 2012 182 939
- US-A1- 2012 256 592

## Description

L'invention concerne les alimentations de circuits électriques par des éléments de stockage d'énergie électrique, et en particulier l'alimentation d'appareils électriques nomades tels que des véhicules à moteurs électriques, par l'intermédiaire de batteries de cellules électrochimiques.

La multitude d'appareils électriques nomades distribués présente des besoins spécifiques pour son stockage d'énergie, induisant des tensions d'alimentation et des capacités de stockage d'énergie distinctes pour la plupart de ces appareils. Le coût de fabrication de cellules électrochimiques de batteries étant relativement élevé, l'approche généralement choisie par les fabricants de batteries est de concevoir une batterie présentant un dimensionnement spécifique pour l'appareil électrique à alimenter. Ainsi, l'effet d'échelle est relativement limité dans la plupart des cas, ce qui constitue un frein à une baisse du coût de fabrication des batteries et à leur diffusion. La limitation de l'effet d'échelle est particulièrement sensible pour des batteries de puissance.

En outre, les batteries sont dimensionnées pour prendre en compte les cas de fonctionnement les plus extrêmes et sont ainsi le plus souvent surdimensionnées pour l'utilisation quotidienne des utilisateurs. L'autonomie d'un véhicule à motorisation électrique est par exemple définie par la capacité de sa batterie, cette capacité étant dimensionnée par un nombre approprié de cellules électrochimiques connectées électriquement en série et en parallèle. Par exemple, une batterie peut être dimensionnée pour une autonomie de 80 km d'un vélo à assistance électrique, alors que l'utilisateur procède en pratique à sa recharge tous les 15 km de par son utilisation quotidienne. Par conséquent, l'utilisateur fait l'acquisition d'une batterie surdimensionnée et donc plus chère par rapport à son utilisation réelle.

Il existe donc un besoin pour une solution permettant de standardiser les cellules électrochimiques de différentes batteries, afin de pouvoir d'une part bénéficier d'un effet d'échelle pour différentes applications, et de pouvoir d'autre part adapter le nombre de cellules électrochimiques aux besoins réels de l'utilisateur. Ces résultats doivent être obtenus en conservant un système nécessitant un minimum de précautions d'utilisation et une disponibilité immédiate de la charge électrique alimentée par une telle alimentation.

L'invention vise à résoudre un ou plusieurs de ces inconvénients. L'invention porte ainsi sur un système d'alimentation électrique tel que défini dans les revendications annexées.

Par ailleurs, on peut noter que le document JP2001-086662 décrit un système d'alimentation électrique avec une interface d'interconnexion pour connecter sélectivement plusieurs modules de stockage d'énergie électrique en parallèle. Un circuit de contrôle détermine le nombre de modules connectés à l'interface. L'alimentation d'une charge est gérée en fonction du nombre de modules déterminé.

En outre, on peut noter que le document JP2008-118790 décrit un système d'alimentation électrique comprenant plusieurs branches connectées en parallèle. Un circuit de commande contrôle le courant débité vers la charge par chacune des branches afin d'équilibrer les états de charge des différentes branches.

D'autres caractéristiques et avantages de l'invention ressortiront clairement de la description qui en est faite ci-après, à titre indicatif et nullement limitatif, en référence aux dessins annexés, dans lesquels :
- la figure 1 est une représentation schématique d'un système mettant en oeuvre un dispositif d'alimentation selon l'invention ;
- la figure 2 est une représentation schématique d'un module de batterie pouvant être connecté à une interface d'interconnexion ;
- la figure 3 est une représentation schématique d'un module de commande d'une interface d'interconnexion ;
- la figure 4 illustre un exemple de rhéostat pouvant être utilisé dans le cadre de l'invention ;
- la figure 5 illustre un autre exemple de rhéostat pouvant être utilisé dans le cadre de l'invention ;
- la figure 6 est un exemple de schéma électrique d'une partie d'une interface d'interconnexion ;
- la figure 7 est un diagramme illustrant la charge d'une batterie réalisée à partir d'accumulateurs de type lithium-ion LiFePO₄ ;
- la figure 8 est un exemple de cycle d'utilisation d'un système d'alimentation alimentant un moteur de véhicule électrique ;
- la figure 9 illustre les intensités respectives traversant deux transistors dans un exemple de mise en oeuvre de l'invention ;
- la figure 10 illustre les intensités respectives débitées par deux modules connectés en parallèle avec un circuit de l'état de la technique ;
- la figure 11 détaillant les intensités respectives traversant les deux transistors dans les mêmes conditions qu'à la figure 9, pour deux premiers cycles de fonctionnement ;
- la figure 12 illustre l'évolution des états de charge des modules lors d'une décharge en répétant les cycles d'utilisation de la figure 8 ;
- la figure 13 est une vue en coupe schématique d'un exemple de système de refroidissement pour des transistors d'une interface d'interconnexion ;
- la figure 14 illustre la température de jonction et la puissance du transistor le plus sollicité lors du fonctionnement illustré à la figure 11 ;
- la figure 15 illustre différentes températures pour le transistor le plus sollicité, lors d'une répétition de cycles d'utilisation ;
- la figure 16 est une représentation schématique

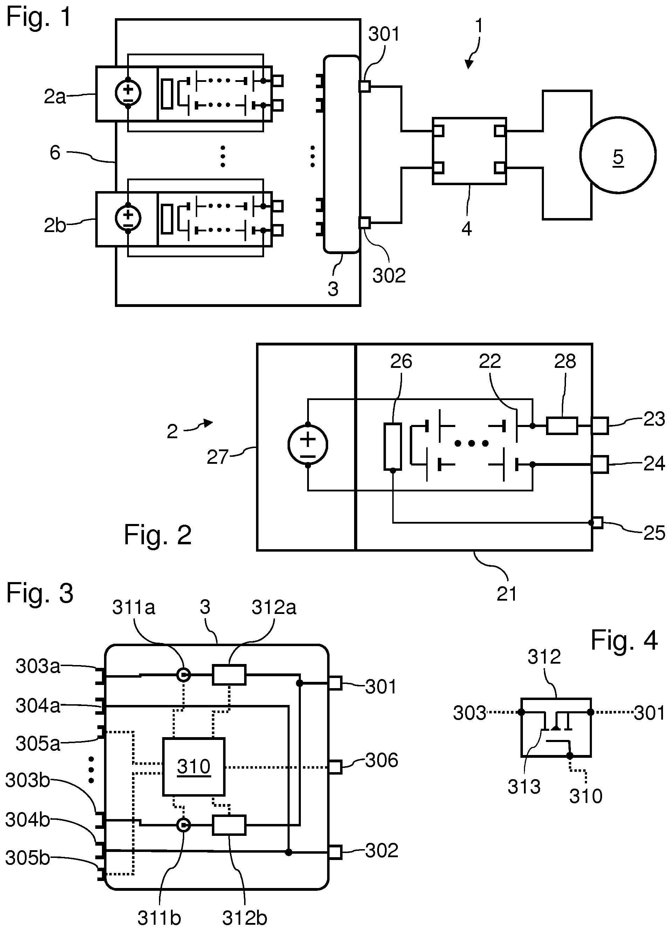

La figure 1 est une représentation schématique d'un système 1 mettant en oeuvre un dispositif d'alimentation selon l'invention. Le système 1 comporte une charge électrique 5 à alimenter, par exemple un moteur électrique d'un véhicule. Le système 1 comporte en outre un dispositif d'alimentation à source de tension continue et un onduleur 4. Le dispositif d'alimentation à source de tension continue applique sa tension de sortie sur deux premières bornes de l'onduleur 4. Deux secondes bornes de l'onduleur 4 (pour une alimentation alternative monophasée) sont connectées à la charge 5.

Le dispositif d'alimentation est typiquement un dispositif d'alimentation de puissance, pouvant délivrer une intensité supérieure à 15A tout en appliquant une tension au moins égale à 20 V. Le dispositif d'alimentation à source de tension continue comporte ici une interface d'interconnexion 3 solidarisée à un boîtier 6. Le dispositif d'alimentation à source de tension continue comporte en outre plusieurs modules formant des sources de tension continue. Le dispositif d'alimentation comporte en l'occurrence deux modules 2a et 2b montés à l'intérieur du boîtier 6 et destinés à être connectés à l'interface d'interconnexion 3. Les modules 2a et 2b comportent une même tension nominale. Comme cela sera détaillé par la suite, l'interface d'interconnexion 3 permet de connecter les modules 2a et 2b en parallèle sans précautions particulières même avec des états de charge différents, en préservant malgré tout ces modules du vieillissement ou d'une destruction explosive induits par un courant de charge ou de décharge trop important. La capacité du système de stockage d'énergie électrique peut donc être adaptée de façon modulable par l'utilisateur final et sans discontinuité d'alimentation du véhicule.

La figure 2 illustre un exemple d'une structure de module 2 pouvant être utilisée dans un dispositif d'alimentation selon l'invention. De façon connue en soi, le module 2 comporte un boîtier 21 dans lequel des cellules électrochimiques 22 sont logées. Les cellules électrochimiques 22 sont ici connectées en série entre des bornes 23 et 24 du module 2. Un dispositif de protection contre les surintensités 28 est connecté en série avec les cellules électrochimiques 22 entre les bornes 23 et 24. La différence de potentiel entre les bornes 23 et 24 est typiquement au moins égale à 20 V, et généralement supérieure à 30 V dans des applications de traction d'un véhicule. Le dispositif de protection 28 peut être de façon connue en soi un fusible dimensionné pour protéger les cellules électrochimiques 22 contre les surintensités. Le module 2 comporte en outre un dispositif 26 de gestion des cellules électrochimiques. Ce dispositif de gestion 26 est par exemple configuré pour mesurer un certain nombre de paramètres de fonctionnement du module 2, par exemple sa température interne, l'état de charge des cellules électrochimiques ou encore la tension aux bornes des cellules électrochimiques. Le dispositif de gestion 26 peut également être configuré pour communiquer un certain nombre d'informations, telles que l'intensité de coupure du dispositif de protection 28 ou différents paramètres de fonctionnement, à un circuit extérieur par l'intermédiaire d'une borne de communication 25. Le module 2 comporte en outre avantageusement un circuit de recharge 27 pouvant être connecté à un réseau public d'électricité pour procéder à la recharge des cellules électrochimiques 22. Le circuit de recharge 27 peut également être un élément séparé du module 2, connectable au module 2 par l'intermédiaire d'une connexion de puissance.

La figure 3 illustre un exemple d'une interface d'interconnexion 3 pouvant être utilisée dans un dispositif d'alimentation selon l'invention. L'interface d'interconnexion 3 comporte des paires de bornes d'entrée pour la connexion de différents modules 2, que l'on souhaite connecter en parallèle. Chaque paire de bornes comporte une borne 303 et une borne 304 destinées respectivement à être connectées aux bornes 23 et 24 d'un module 2. En l'occurrence, les bornes 303a et 304a sont connectées au module 2a, les bornes 303b et 304b étant connectées au module 2b.

L'interface d'interconnexion 3 comporte une paire de bornes de sortie 301 et 302 entre lesquelles la différence de potentiel du dispositif d'alimentation est appliquée. Les bornes 301 et 302 sont ainsi connectées aux premières entrées de l'onduleur 4.

L'interface de d'interconnexion 3 est configurée pour connecter sélectivement les bornes 303 à la borne 301 et les bornes 304 à la borne 302. Les modules 2 sont ainsi connectés au choix de l'utilisateur en parallèle entre les bornes 301 et 302. La connexion électrique entre la borne 301 et chaque borne 303 comporte un rhéostat 312 en série, l'intensité traversant un rhéostat 312 étant mesurée par une sonde de courant 311. En l'occurrence, un rhéostat 312a est connecté entre la borne 301 et la borne 303a, une sonde de courant 311a mesurant le courant à travers le rhéostat 312a, un rhéostat 312b est connecté entre la borne 301 et la borne 303b, une sonde de courant 311b mesurant le courant à travers le rhéostat 312b. Pour chaque module 2 connecté, le dispositif d'alimentation forme ainsi une branche parallèle entre les bornes 301 et 302 dans laquelle le module 2 et un rhéostat 312 sont connectés en série.

Un circuit de contrôle 310 récupère les mesures de courant fournies par les sondes 311 et commande la valeur de résistance des rhéostats 312. Le circuit de contrôle 310 est connecté aux bornes de communication 305, afin de pouvoir communiquer avec les dispositifs de gestion 26 des modules 2. Les bornes 304 sont ici connectées directement à la borne 302. L'interface d'interconnexion 3 comporte une borne de communication 306. Cette borne de communication 306 permet au circuit de contrôle 310 de communiquer avec un contrôleur de la charge 5, par exemple un contrôleur de l'onduleur 4 gérant la puissance appelée par la charge 5.

Le boîtier 6 peut être utilisé afin de protéger l'interface d'interconnexion 3 et les modules par rapport aux agressions extérieures. Le boîtier 6 peut également être utilisé pour permettre le guidage des modules jusqu'à ce que leurs bornes 23, 24 et 25 viennent s'interconnecter avec les bornes 303,304 et 305 respectivement de l'interface d'interconnexion 3.

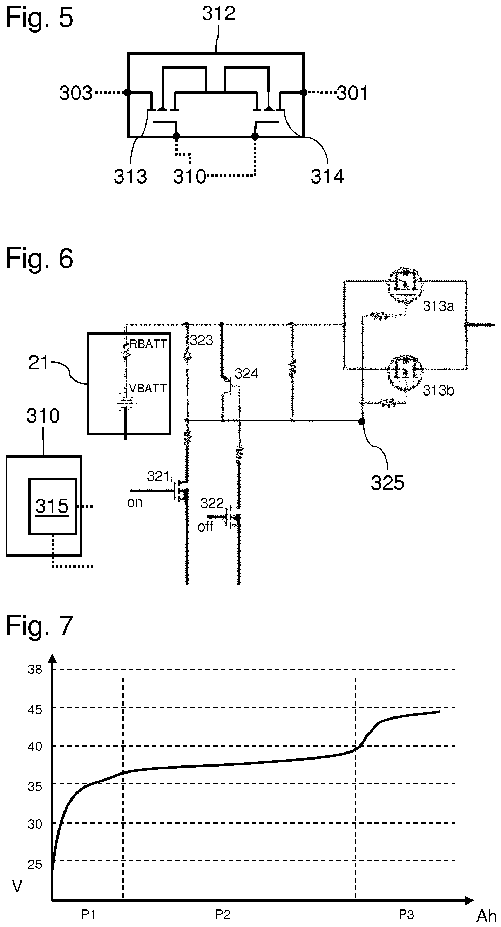

En fonction des mesures de courant effectuées par les sondes 311, le circuit de contrôle 310 maintient l'intensité traversant chaque branche en dessous d'un seuil de protection. Pour cela, le circuit de contrôle commande la résistance présentée par le rhéostat 312 de la branche concernée. Le circuit de contrôle 310 peut par exemple mettre en oeuvre une boucle de régulation pour que le courant traversant la branche concernée soit asservie sur un courant de consigne, inférieur au seuil de protection. Le circuit de contrôle 310 peut mettre en oeuvre un seuil de protection pour la décharge d'un module 2. Avec des rhéostats tels qu'illustrés à la figure 4, la limitation d'un courant de charge est assurée par une limitation des courants de décharge traversant un ou plusieurs autres rhéostats. Avec des rhéostats 312 tels qu'illustrés à la figure 5, un même rhéostat peut être contrôlé par le circuit 310 pour mettre en oeuvre un seuil de protection pour la décharge d'un module 2 et un seuil de protection pour la recharge de ce module 2 de valeurs différentes. En effet, les accumulateurs électrochimiques présentent le plus souvent un courant maximal admissible de décharge très supérieur au courant maximal de recharge admissible.

Le circuit de contrôle 310 peut mettre en oeuvre le fonctionnement suivant, dans lequel un module 2 présentant un état de charge élevé peut procéder à la recharge d'un autre module 2 présentant un état de charge bas. Cet équilibrage de charge peut être effectué soit durant l'utilisation du dispositif d'alimentation, soit durant des phases de repos. Un équilibrage des charges des modules 2 au repos est particulièrement avantageux, puisqu'il permet de profiter des périodes de repos pour procéder à l'équilibrage, et ainsi limiter l'échauffement des rhéostats 312 qui est supérieur durant l'utilisation du dispositif d'alimentation.

Un rhéostat 312 est maintenu à sa valeur de résistance minimale :
- si le courant de décharge mesuré pour le module 2 associé est inférieur au seuil de protection de décharge pour ce module ; et
- si l'ensemble des courants de charge mesurés pour les autres modules 2 sont inférieurs aux seuils de protection de charge de ces autres modules.

Un rhéostat 312 est commandé pour présenter une valeur de résistance accrue, par exemple au moyen d'une régulation de courant :
- si le courant de décharge mesuré pour le module 2 associé atteint le seuil de protection de décharge de ce module ; ou
- si un courant de charge d'un des autres modules 2 atteint le seuil de protection de charge de cet autre module.

Le circuit de contrôle 310 peut émettre une requête de limitation de puissance vers le contrôleur de la charge 5 en vue de limiter éventuellement la température d'un des rhéostats 312. Le circuit de contrôle 310 peut avantageusement commander l'ouverture d'une branche en parallèle s'il constate que la limitation de courant dans cette branche est inefficace, que la température du rhéostat 312 de cette branche dépasse un seuil critique, ou lorsqu'une requête de diminution de puissance émise au contrôleur de la charge 5 n'est pas suivie d'effet.

Du fait de ses fonctions de limitation de courant, le dispositif d'alimentation proposé permet de connecter sans précautions particulières et en un temps réduit des modules 2 présentant des états de charges très distincts, et des modules présentant des structures ou des conceptions très différentes. Un équilibre de charge préalable n'est notamment pas nécessaire avant de procéder à l'utilisation des modules. On limite ainsi le vieillissement des modules 2 en évitant un courant de charge ou de décharge trop important lors d'une connexion avec de trop grandes disparités de charges. Même si l'appel de courant par la charge 5 est élevé, le circuit de contrôle 310 permet de garantir que les modules 2 soient traversés par des courants inférieurs aux seuils de protection. Cet aspect est particulièrement avantageux avec des batteries de type lithium ion, présentant une impédance interne inférieure à celle d'une batterie au plomb. Un tel dispositif d'alimentation permet en outre à un utilisateur d'acquérir un nombre souhaité de modules 2, la capacité du dispositif d'alimentation pouvant ainsi être adaptée en rajoutant des modules. Ainsi, les modules pourront être standardisés pour une grande variété de dispositifs d'alimentation présentant des capacités différentes, ce qui permet de réduire fortement le prix de revient de tels modules par des économies d'échelle. En fonction de l'utilisation souhaitée, l'utilisateur pourra en outre choisir de connecter un nombre de modules 2 réduit, par exemple afin d'alléger le poids du dispositif d'alimentation.

Lors de la connexion d'un module de stockage 2, le circuit de contrôle 310 peut réaliser une limitation de l'intensité traversant ce module à un seuil de protection bas, par défaut. Ensuite, le circuit de contrôle 310 peut communiquer avec le module 2 par l'intermédiaire d'une borne 305. Le circuit de contrôle 310 peut notamment récupérer une valeur maximale d'intensité de décharge ou d'intensité de recharge fournie par le dispositif de gestion 26 du module 2. Une fois connue ces valeurs de charge ou de décharge, le circuit de contrôle 310 peut adapter le seuil de protection de charge et le seuil de protection de décharge du rhéostat 312 associé, à une valeur appropriée. On peut ainsi utiliser le module 2 sur toute sa gamme de puissance. Quoi qu'il en soit, le circuit de contrôle 310 utilise un seuil de protection d'une valeur inférieure au seuil de coupure du fusible 28. Dès lors, le rhéostat 312 assure une protection de son module 2 avant l'ouverture du fusible 28 associé.

Par ailleurs, le circuit de contrôle 310 peut également communiquer avec le dispositif de gestion 26 d'un module 2 afin de déterminer lequel des modules 2 doit être rechargé en priorité lors d'un équilibrage de charge. De même, le circuit de contrôle 310 peut favoriser la décharge de certains modules 2, par exemple lors d'une décharge à basse température, si leur dispositif de gestion 26 indique qu'ils sont particulièrement performants à basse température.

Avantageusement, le circuit de contrôle 310 peut récupérer ou calculer une valeur de température des transistors 313. Le circuit de contrôle 310 peut requérir au contrôleur de la charge électrique 5 de réduire la puissance appelée afin de permettre un refroidissement du transistor 313 si une température excessive est mesurée. En cas de surchauffe d'un transistor 313, le circuit de contrôle 310 peut commander l'ouverture de ce transistor afin d'interrompre momentanément une dissipation de puissance.

Le circuit de contrôle 310 peut également communiquer avec le contrôleur de la charge électrique 5, afin de fournir des informations telles que la capacité de décharge du système incluant l'interface d'interconnexion 3 et les modules 2, l'énergie restante, la puissance maximale acceptable en charge et en décharge, l'identification de défauts éventuels...

La figure 4 est une représentation schématique d'une première variante de rhéostat 312 pouvant être mise en oeuvre selon l'invention, assurant ici une protection contre les courants de décharge. Le rhéostat 312 inclut ici un transistor MOS 313. La jonction drain/source est ici connectée en série entre une borne d'entrée 303 et une borne de sortie 301. La valeur de résistance drain/source du transistor 313 est définie par l'amplitude de la différence de potentiel Vgs appliquée par le circuit de contrôle 310. Pour procéder à la régulation du courant traversant le transistor 313, le circuit de contrôle 310 commande celui-ci en régime linéaire pour augmenter sa résistance lorsque le courant approche du seuil de protection. Le circuit de contrôle 310 peut appliquer un seuil de protection pour le courant de décharge. Pour protéger le module correspondant contre le courant de charge, le circuit de contrôle 310 limite les courants de décharge des autres modules.

La figure 5 est une représentation schématique d'une deuxième variante de rhéostat 312 pouvant être mise en oeuvre selon l'invention, apte à assurer une protection contre les courants de charge et contre les courants de décharge. Le rhéostat 312 comprend ici deux transistors Mos 313 et 314 montés tête-bêche en série entre une borne d'entrée 303 et une borne de sortie 301. La valeur de résistance drain/source de chaque transistor 313 ou 314 est définie par l'amplitude de la différence de potentiel Vgs appliquée par le circuit de contrôle 310. Un tel rhéostat 312 permet avantageusement de contrôler indépendamment le seuil de protection de décharge par le transistor 313, et le seuil de protection de charge par le transistor 314. Selon cette variante, le circuit de contrôle 310 n'a plus à coordonner les charges et décharges respectives des modules 2. En effet, le courant de charge d'un module 2 est automatiquement limité, sans avoir à intervenir sur la régulation du courant de décharge d'un autre module 2 ayant un état de charge supérieur. Des circuits de contrôle indépendants peuvent alors être associés à chacun des modules 2. Des commandes analogiques peuvent alors être utilisées pour les rhéostats 312, à un coût réduit et avec une robustesse importante. Par ailleurs, l'utilisation d'un tel rhéostat permet éventuellement de se passer d'un contrôle de courant indépendant à l'intérieur du module 2.

Comme détaillé par la suite, l'utilisation des structures des figures 4 et 5 permet de combiner les fonctions de rhéostat 312 et d'interrupteur de sécurité, par une commande appropriée du circuit de contrôle 310.

Dans l'exemple illustré à la figure 6, le circuit de contrôle 310 inclut un microcontrôleur 315. La figure 6 est un exemple de schéma électrique montrant la commande d'un rhéostat par ce microcontrôleur 315. Le rhéostat 312 comporte ici deux transistors MOS dédoublés 313a et 313b. L'interface d'interconnexion présente ici une diode de protection 323, un transistor bipolaire 324, un premier transistor de commande 321 et un deuxième transistor de commande 322. Le microcontrôleur 315 maintient le transistor 321 fermé tant que le courant traversant le module 2 n'atteint pas le seuil de protection. Les transistors 313a et 313b sont alors fermés avec une résistance drain/source minimale. Lorsque le microcontrôleur souhaite utiliser la fonction interrupteur des transistors 313a et 313b, il ferme le transistor 322, de sorte que les transistors 313a et 313b s'ouvrent. En appliquant un niveau de tension approprié sur la grille des transistors par l'intermédiaire d'un plot 325, le microcontrôleur 315 utilise les transistors 313a et 313b en régime linéaire.

On peut également envisager une boucle de régulation analogique de secours sans faire appel au microcontrôleur 315, afin de pallier rapidement une défaillance de ce microcontrôleur 315.

Dans le mode de réalisation détaillé jusqu'ici, les rhéostats 312 sont inclus dans l'interface d'interconnexion 3. On peut cependant envisager que les modules 2 incluent un rhéostat connecté en série avec leur élément de stockage d'énergie électrique, ces rhéostats 312 étant alors commandés par le circuit de contrôle 310 par l'intermédiaire des bornes 25 et 305.

La figure 7 illustre un diagramme de charge d'un module 2 incluant des cellules de type LiFePO₄ connectées en série (ici au nombre de 12). La charge du module 2 comprend une première plage P1 comprise entre 24 et 37,8V pour un état de charge bas, compris par exemple entre 0 et 10 % de son état de charge. La charge du module comprend une deuxième plage P2 comprise entre 37,8 et 39,6 V ayant sensiblement une forme de plateau et correspondant à un état de charge médian du module 2, compris par exemple entre 10 et 95 % de l'état de charge. La charge du module 2 comprend une troisième plage P3 comprise entre 39,6 V et 44,4 V pour un état de charge haut, compris par exemple entre 95 et 100 % de l'état de charge. L'invention s'avère particulièrement appropriée avec des modules incluant de telles cellules électrochimiques. En effet, pour un état de charge médian (pour une très grande plage d'état de charge), deux modules ayant des états de charge très différents ont des différences de potentiel à leurs bornes relativement peu différentes. Par conséquent, la puissance consommée dans le rhéostat du module 2 le plus chargé lors d'un appel de puissance reste relativement réduite avec ce type de cellules électrochimiques.

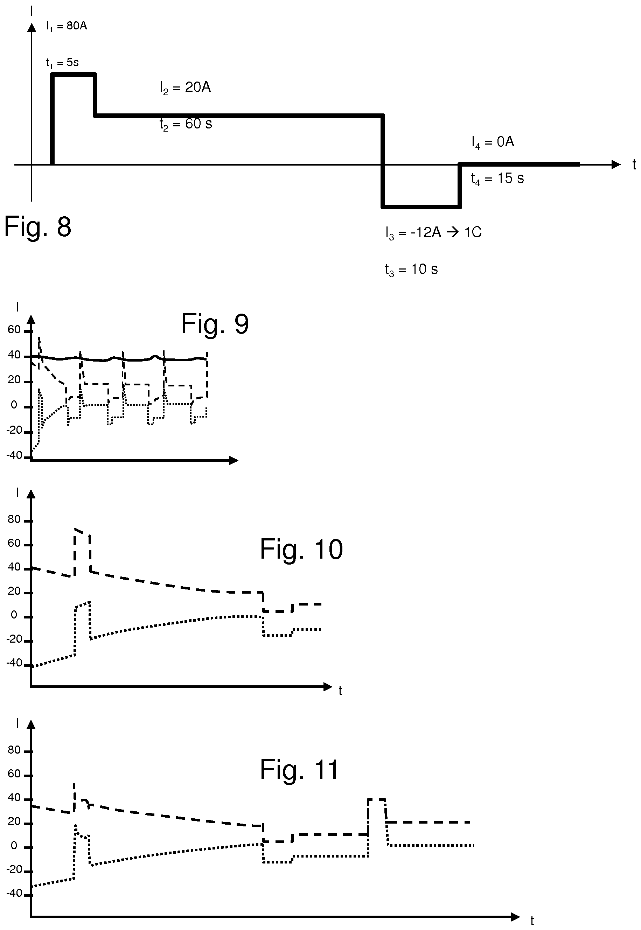

La figure 8 illustre un exemple de cycle d'utilisation de référence pour un système d'alimentation d'un moteur d'un deux roues motorisé. Ce cycle inclut un pic de décharge, une décharge moyenne constante, une recharge régénérative, et une absence d'alimentation.

Dans les exemples qui vont suivre, on va présenter des résultats de simulation basés sur ce cycle, en utilisant deux modules 2 (incluant des accumulateurs électrochimiques de type LiFePO₄) connectés en parallèle par l'interface d'interconnexion 3, un premier module ayant un état de charge de 20%, l'autre module étant pleinement chargé. Les rhéostats 312 utilisés sont ici du type décrit à la figure 4.

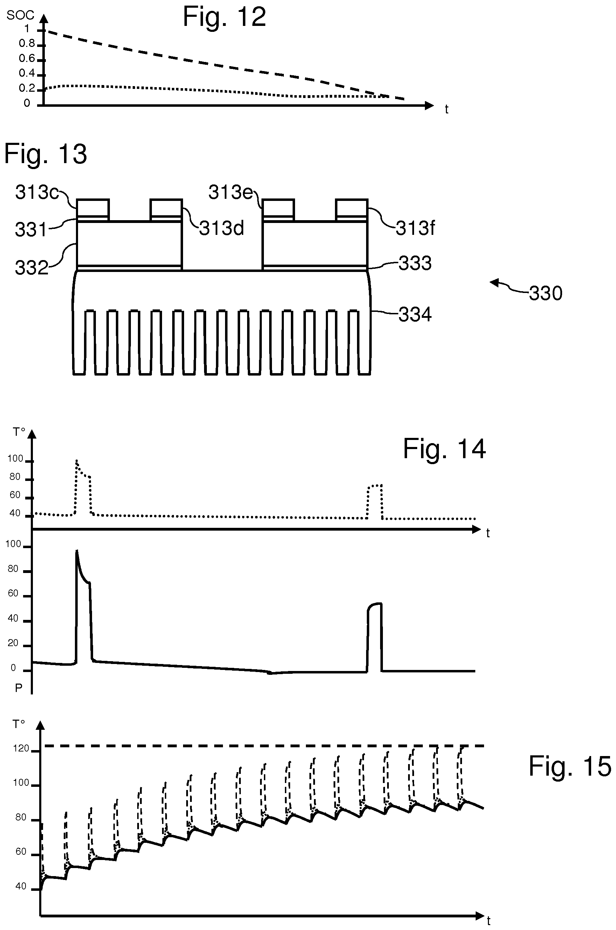

La figure 9 illustre les intensités respectives traversant les deux transistors sur les quatre premiers cycles. La courbe en trait discontinu correspond à l'intensité à travers le rhéostat du module le plus chargé, la courbe en pointillés correspondant à l'intensité à travers le rhéostat du module le moins chargé. Ces intensités sont illustrées de façon plus détaillées sur les deux premiers cycles à la figure 11. Une intensité négative correspond à une recharge du module correspondant. La courbe en trait plein correspond à la différence de potentiel entre les bornes 301 et 302. On constate que la contribution du module le plus chargé est supérieure à celle du module le moins chargé lors du pic de puissance. L'intensité de décharge du module le plus chargé reste cependant limitée à une valeur inférieure à un seuil de protection de décharge de 60A durant ce pic. Le module le moins chargé contribue également dans une moindre mesure au courant de décharge durant la décharge moyenne. Par ailleurs, le module le plus chargé recharge le module le moins chargé durant l'absence d'alimentation. De même, le module le moins chargé est prioritairement rechargé durant la recharge régénérative. A la figure 12, on a illustré l'évolution des états de charge de ces modules en répétant les cycles de test. Les états de charge convergent dans la durée, l'état de charge du module le moins chargé restant en outre suffisant pour éviter sa détérioration.

En répétant les cycles jusqu'à un équilibrage de charge, on a constaté une déperdition par effet Joule de 3,8Wh dans le rhéostat du module le moins chargé, et une déperdition de 1Wh dans le rhéostat du module le plus chargé, pour une énergie totale fournie de 466Wh. Ainsi, même avec un très important écart d'état de charge, la déperdition de puissance à travers les rhéostats est limitée à environ 1% de l'énergie fournie. La majeure partie des déperditions intervient durant les pics de puissance, qui ont un rapport cyclique relativement limité.

Par comparaison, la figure 10 illustre les intensités traversant les deux modules durant le premier cycle de test, lorsque ceux-ci sont connectés en parallèle avec un circuit selon l'état de la technique. On constate que le module le plus chargé subit une décharge dépassant son intensité de décharge admissible durant le pic de puissance. Par ailleurs, on constate que le module le moins chargé subit une recharge dépassant son intensité de recharge admissible durant l'absence de d'alimentation de la charge.

La figure 13 est une vue en coupe schématique d'un exemple de système de refroidissement 330 pour des rhéostats d'une interface d'interconnexion 3. Le système de refroidissement 330 illustré est simplifié pour des raisons de lisibilité et ne procède au refroidissement que de deux rhéostats. Les rhéostats sont en l'occurrence du type illustré à la figure 4, deux transistors étant connectés en parallèle dans chaque rhéostat. Le système de refroidissement 330 comporte des tampons d'absorption d'énergie thermique 332. Un premier tampon 332 est disposé sous les transistors 313c et 313d. Un deuxième tampon 332 est disposé sous les transistors 313e et 313f. Une graisse thermique 331 est typiquement interposée entre les tampons 332 et les transistors 313c, 313d, 313e, 313f. Les tampons 332 sont fixés sur un dissipateur thermique 334. Des couches isolantes électriques et conductrices thermiques 333 sont interposées en contact entre les tampons 332 et le dissipateur 334. Les couches isolantes 333 peuvent être des produits distribués sous la référence commerciale SilPad.

Les tampons 332 sont dimensionnés pour absorber rapidement de l'énergie thermique générée par un rhéostat lors d'un pic de puissance. Les tampons 332 visent ainsi à éviter une élévation soudaine de température dans les rhéostats et visent à conduire l'énergie thermique des rhéostats jusqu'au dissipateur 334. Les tampons peuvent par exemple être formés d'un bloc de masse de métal.

Le dissipateur 334 est configuré pour dissiper la puissance thermique générée par les transistors 313c, 313d, 313e, 313f, et transmise par les tampons 332. Le dissipateur 334 est dimensionné pour dissiper la puissance thermique moyenne générée par les transistors 313c, 313d, 313e, 313f. Le dissipateur 334 vise ainsi à maintenir la température moyenne des transistors en dessous d'un certain niveau.

Pour des transistors 313c, 313d, 313e, 313f dans lesquels la dissipation thermique s'effectue au niveau du drain, les couches 333 permettent d'isoler les drains des transistors des deux rhéostats, ceux-ci étant susceptibles de présenter un potentiel électrique différent. Afin de favoriser le transfert thermique entre les transistors et les tampons 332, la graisse thermique 331 peut-être du type conductrice électriquement, les tampons 332 étant alors au potentiel des drains des transistors auxquels ils sont associés.

La figure 14 illustre la température de jonction et la puissance du transistor le plus sollicité lors des deux premiers cycles de fonctionnement. Les simulations ont été effectuées avec une température ambiante de 45°.

La figure 15 illustre d'une part la température de jonction de ce transistor (en trait discontinu), d'autre part la température de son tampon 332 (en pointillés) et par ailleurs la température du dissipateur 334 (en trait continu). On constate qu'avec une répétition de cycles, la température de jonction reste inférieure à un seuil de 125°, le transistor simulé ayant une température de jonction maximale admissible de 175°.

Par sécurité, il est possible d'estimer par le circuit de contrôle 310 la température de jonction des transistors 313c, 313d, 313e, 313f en mesurant le courant les traversant, la tension à leurs bornes et la température ambiante.

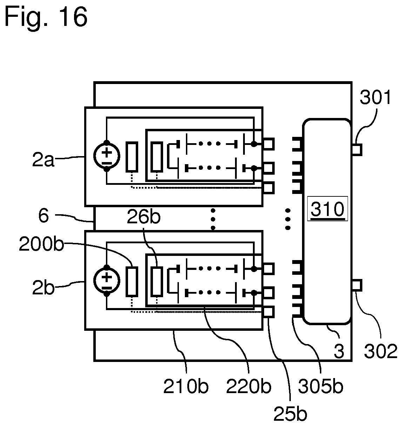

Par ailleurs, l'invention porte sur un dispositif d'alimentation électrique comportant une répartition de fonctions entre ses différents éléments structurels. La figure 16 est une représentation schématique d'un tel dispositif d'alimentation électrique. Le dispositif d'alimentation électrique ici illustré présente une interface d'interconnexion 3, un boîtier 6 auquel l'interface d'interconnexion 3 est fixée, et des modules 2a et 2b.

Les modules 2a et 2b incluent d'une part un boîtier et d'autre part un élément de stockage d'énergie électrique. Le module 2b inclut en particulier un boîtier 210b et un élément de stockage d'énergie électrique 220b. Le boîtier 210b inclut la connectique (bornes 23, 24 et 25) et un circuit de supervision de module 200b. L'élément de stockage 220b est logé de façon amovible dans le boîtier 210b et inclut des cellules électrochimiques et un dispositif de gestion des cellules 26b. Le boîtier 210b peut présenter un facteur de forme standard en vue d'accueillir différents types d'éléments de stockage. Le boîtier 210b peut notamment servir d'adaptateur entre un élément de stockage et l'interface d'interconnexion 3.

Parmi les fonctions envisagées, on peut notamment citer les fonctions suivantes :
- mesure des tensions des cellules électrochimiques et des températures ;
- mesure du courant traversant le module ;
- mise en sécurité du module en cas de :
   courant de charge / décharge trop élevé ;
   tension d'une cellule électrochimique trop haute / trop basse ;
   température trop élevée / trop basse ;
- gestion de la fin de charge d'un module ;
- calcul de l'énergie restante dans le module ;
- calcul de la puissance que peut fournir / absorber le module ;
- enregistrement des données d'utilisation (du transport à l'utilisation, en passant par le stockage) du module pour la garantie ;
- communication avec la charge électrique alimentée (énergie restante, puissance disponible, alarmes/défauts...) ;
- régulation du courant de décharge de chaque module ;
- gestion des modules de façon à assurer la continuité de service de la charge électrique, et à réduire les pertes.

On peut envisager d'exécuter les fonctions suivantes dans les modules 2 :
- mesure des tensions des cellules électrochimiques et des températures ;
- mesure du courant traversant le module ;
- mise en sécurité des cellules en cas de :
   courant de charge / décharge trop élevé ;
   tension d'une cellule électrochimique trop haute / trop basse ;
   température trop élevée / trop basse ;
- gestion de la fin de charge d'un module ;
- calcul de l'énergie restante dans le module ;
- calcul de la puissance que peut fournir / absorber le module ;
- enregistrement des données d'utilisation du module pour la garantie ;

On peut envisager d'exécuter les fonctions suivantes dans l'interface d'interconnexion 3 :
- communication avec la charge électrique alimentée (énergie restante, puissance disponible, alarmes/défauts...) ;
- régulation du courant de décharge de chaque module ;
- gestion des modules de façon à assurer la continuité de service de la charge électrique, et à réduire les pertes.

Le module 2 et l'interface d'interconnexion 3 peuvent être connectés par un bus de communication (type RS232, LIN, CAN ou SPI, I2C..., en fonction de la position des sondes 311). Ce type de répartition permet de n'avoir pas ou peu de gestion thermique au niveau du module 2. En effet, les puissances dissipées lors de l'équilibrage des cellules électrochimiques ou bien au passage de la puissance à travers les composants de puissance du dispositif de gestion 26 sont de l'ordre du Watt, tandis que la puissance dissipée dans la régulation du courant de sortie de chaque module 2 peut atteindre plusieurs dizaines de Watt.

On peut envisager d'exécuter les fonctions suivantes dans le dispositif de gestion 26b, fonctions formant un sous-ensemble de surveillance et de maintien en sécurité des cellules :
- mesure des tensions des cellules électrochimiques et des températures ;
- mise en sécurité des cellules en cas de :
   courant de charge / décharge trop élevé ;
   tension d'une cellule électrochimique trop haute / trop basse ;
   température trop élevée / trop basse ;
- équilibrage des tensions de cellules.

On peut envisager d'exécuter les fonctions suivantes dans le dispositif de supervision 200b, fonctions formant un sous-ensemble de suivi d'usage, de calcul de performances et de communication :
- mesure du courant traversant le module ;
- calcul de l'énergie restante dans le module ;
- calcul de la puissance que peut fournir / absorber le module ;
- enregistrement des données d'utilisation du module pour la garantie.

Cette répartition des fonctions permet l'utilisation d'un circuit de maintien en sécurité des cellules associé à ces dernières et fonctionnant de manière indépendante vis-à-vis du reste du dispositif d'alimentation. Il est ainsi plus facile d'adapter un élément de stockage existant pour le rendre compatible avec l'interface d'interconnexion 3 en utilisant un dispositif de supervision 200b intégré dans un boîtier 210b d'adaptation.

## Revendications

1. Système d'alimentation électrique (1) à capacité modulable, comprenant :
- au moins deux modules de stockage d'énergie électrique (2), comportant chacun deux bornes de connexion de polarités opposées et un élément de stockage d'énergie électrique connecté entre les deux bornes ;
- une interface d'interconnexion (3), présentant :
- au moins deux paires de bornes d'entrée, chaque paire étant connectée de façon amovible aux bornes de connexion d'un module de stockage respectif;
- deux bornes de sortie (301,302) pour l'alimentation d'une charge électrique (4, 5), l'interface d'interconnexion formant au moins deux branches connectées en parallèle entre les deux bornes de sortie, chaque branche incluant un desdits éléments de stockage d'énergie électrique ;
**Caractérisé en ce que** :
- chacune desdites branche formée par l'interface d'interconnexion inclut un rhéostat connecté en série avec l'élément de stockage d'énergie électrique de la branche ;
- l'interface d'interconnexion comprend un dispositif de mesure du courant traversant chacune desdites branches ;
- l'interface d'interconnexion comprend un circuit de contrôle commandant la résistance du rhéostat de chacune desdites branches en fonction du courant mesuré, de façon à maintenir l'intensité le traversant en dessous d'un seuil de protection.

2. Système d'alimentation électrique (1) selon la revendication 1, dans lequel lesdits éléments de stockage d'énergie électrique (22) sont des accumulateurs électrochimiques.

3. Système d'alimentation électrique selon la revendication 2, dans lequel lesdits accumulateurs électrochimiques sont de type LiFePO₄.

4. Système d'alimentation électrique (1) selon l'une quelconque des revendications précédentes, dans lequel chacun desdits rhéostats (312) est inclus dans l'interface d'interconnexion (3) et est connecté entre une borne d'entrée respective (303) et une borne de sortie (301).

5. Système d'alimentation électrique selon l'une quelconque des revendications précédentes, dans lequel chacun desdits rhéostats comprend un transistor MOS (313) dont la résistance est définie par l'application d'une tension grille/source par le circuit de contrôle (310).

6. Système d'alimentation électrique selon la revendication 5, dans lequel chacun desdits rhéostats comprend deux transistors MOS (313, 314) connectés tête-bêche en série, la résistance de chacun desdits deux transistors étant définie par l'application d'une tension grille/source par le circuit de contrôle (310).

7. Système d'alimentation électrique selon l'une quelconque des revendications précédentes, incluant un dissipateur thermique (334), deux éléments d'absorption thermique (332) accouplés thermiquement au dissipateur thermique (334), chaque élément d'absorption thermique (332) étant accouplé thermiquement à un rhéostat respectif.

8. Système d'alimentation électrique selon les revendications 5 et 7, dans lequel les éléments d'absorption thermiques (334) sont accouplés thermiquement au dissipateur thermique (332) par l'intermédiaire d'une couche conductrice thermiquement et isolante électriquement.

9. Système d'alimentation électrique selon l'une quelconque des revendications précédentes, dans lequel ledit circuit de contrôle (310) est configuré pour maintenir l'intensité traversant un rhéostat (312) en dessous d'un premier seuil de protection lorsque celui-ci est traversé par un courant de décharge du module associé et pour maintenir l'intensité traversant le rhéostat en dessous d'un second seuil de protection lorsque celui-ci est traversé par un courant de charge, les premier et deuxième seuils de protection étant différents.

10. Système d'alimentation électrique selon l'une quelconque des revendications précédentes, dans lequel ledit circuit de contrôle (310) est configuré pour permettre la décharge d'un module (2) présentant un état de charge plus élevé vers un module présentant un état de charge moins élevé en l'absence de charge électrique (5) connectée aux bornes de sortie (301, 302) de l'interface d'interconnexion (3).

11. Système d'alimentation électrique (1) selon l'une quelconque des revendications précédentes, chacune desdites branche incluant un fusible (28) connecté en série avec un desdits éléments de stockage d'énergie électrique (22) et un rhéostat (312), le seuil de coupure du fusible étant supérieur audit seuil de protection.

12. Système d'alimentation électrique (1) selon l'une quelconque des revendications précédentes, comprenant un boîtier de protection (6) dans lequel les bornes d'entrée (303a, 304a, 303b, 304b) de l'interface d'interconnexion (3) sont logées, le boîtier de protection (6) guidant lesdits modules de stockage (2) en coulissement de sorte que les bornes de connexion (23, 24) d'un module de stockage en bout de course de coulissement se connecte à une paire respective de bornes d'entrée de l'interface d'interconnexion (3).

13. Système d'alimentation électrique selon l'une quelconque des revendications précédentes, dans laquelle lesdits modules incluent un boîtier (210b) dans lequel est logé ledit élément de stockage d'énergie électrique (220b) de façon amovible, ledit élément de stockage incluant des cellules électrochimiques et un dispositif de gestion (26b) de ces cellules, ledit boîtier incluant un dispositif de supervision (200b) et une connectique connectant électriquement ledit élément de stockage auxdites deux bornes de connexion de polarités opposées du module, dans lequel :
- le dispositif de gestion est programmé pour mettre en oeuvre une fonctionnalité parmi la mesure de tension et de température des cellules électrochimiques, la mise en sécurité des cellules en cas de courant de charge ou de décharge excessif, en cas de tension d'une cellule électrochimique trop haute ou trop basse, l'équilibrage des tensions des cellules ;
- le dispositif de supervision est programmé pour mettre en oeuvre une fonctionnalité parmi la mesure du courant traversant l'élément de stockage, le calcul de l'énergie restante dans l'élément de stockage le calcul de la puissance de charge/décharge de l'élément de stockage, l'enregistrement des données d'utilisation du module.

## Patentansprüche

1. Stromversorgungssystem (1) mit modulierbarer Kapazität, das Folgendes umfasst:
- wenigstens zwei Module (2) zum Speichern elektrischer Energie, die jeweils zwei Verbindungsanschlüsse mit entgegengesetzten Polaritäten und ein zwischen den beiden Anschlüssen angeschlossenes Element zum Speichern elektrischer Energie enthalten;
- eine Zwischenverbindungsschnittstelle (3), die Folgendes aufweist:
- wenigstens zwei Paare Eingangsanschlüsse, wobei jedes Paar lösbar mit den Verbindungsanschlüssen eines entsprechenden Speichermoduls verbunden ist;
- zwei Ausgangsanschlüsse (301, 302) für die Versorgung einer elektrischen Last (4, 5), wobei die Zwischenverbindungsschnittstelle zwischen den beiden Ausgangsanschlüssen wenigstens zwei parallele Zweige bildet, wovon jeder eines der Elemente zum Speichern elektrischer Energie enthält;
**dadurch gekennzeichnet, dass**:
- jeder Zweig, der durch die Zwischenverbindungsschnittstelle gebildet ist, einen Rheostaten enthält, der mit dem Element zum Speichern elektrischer Energie dieses Zweigs in Reihe geschaltet ist;
- die Zwischenverbindungsschnittstelle eine Vorrichtung zum Messen des Stroms, der durch jeden der Zweige fließt, enthält;
- die Zwischenverbindungsschnittstelle eine Steuerschaltung enthält, die den Widerstand des Rheostaten jedes der Zweige als Funktion des gemessenen Stroms in der Weise steuert, dass dessen Stärke unter einem Schutzschwellenwert gehalten wird.

2. Stromversorgungssystem (1) nach Anspruch 1, wobei die Elemente (22) zum Speichern elektrischer Energie elektrochemische Akkumulatoren sind.

3. Stromversorgungssystem nach Anspruch 2, wobei die elektrochemischen Akkumulatoren vom Typ LiFePO₄ sind.

4. Stromversorgungssystem (1) nach einem der vorhergehenden Ansprüche, wobei jeder der Rheostaten (312) in der Zwischenverbindungsschnittstelle (3) enthalten ist und zwischen einen jeweiligen Eingangsanschluss (303) und einen Ausgangsanschluss (301) geschaltet ist.

5. Stromversorgungssystem nach einem der vorhergehenden Ansprüche, wobei jeder der Rheostaten einen MOS-Transistor (313) enthält, dessen Widerstand durch Anlegen einer Gate/Source-Spannung mittels der Steuerschaltung (310) definiert ist.

6. Stromversorgungssystem nach Anspruch 5, wobei jeder der Rheostaten zwei MOS-Transistoren (313, 314), die entgegengesetzt in Reihe geschaltet sind, enthält, wobei der Widerstand jedes der zwei Transistoren durch Anlegen einer Gate/Source-Spannung mittels der Steuerschaltung (310) definiert ist.

7. Stromversorgungssystem nach einem der vorhergehenden Ansprüche, das eine Wärmeabführungseinrichtung (334) und zwei Wärmeabsorptionselemente (332), die mit der Wärmeabführungseinrichtung (334) wärmetechnisch gekoppelt sind, enthält, wobei jedes Wärmeabsorptionselement (332) mit einem jeweiligen Rheostaten wärmetechnisch gekoppelt ist.

8. Stromversorgungssystem nach den Ansprüchen 5 und 7, wobei die thermischen Absorptionselemente (334) mit der Wärmeabführungseinrichtung (332) über eine wärmeleitende und elektrisch isolierende Schicht wärmetechnisch gekoppelt sind.

9. Stromversorgungssystem nach einem der vorhergehenden Ansprüche, wobei die Steuerschaltung (310) konfiguriert ist, die Stromstärke durch einen Rheostaten (312) unter einem ersten Schutzschwellenwert zu halten, wenn jener von einem Entladestrom des zugeordneten Moduls durchflossen wird, und die Stromstärke durch den Rheostaten unter einem zweiten Schutzschwellenwert zu halten, wenn jener von einem Ladestrom durchflossen wird, wobei der erste und der zweite Schutzschwellenwert verschieden sind.

10. Stromversorgungssystem nach einem der vorhergehenden Ansprüche, wobei die Steuerschaltung (310) konfiguriert ist, bei Abwesenheit einer Anschluss einer elektrischen Last (5) an die Ausgangsanschlüsse (301, 302) der Zwischenverbindungsschnittstelle (3), das Entladen eines Moduls (2), das einen höheren Ladezustand aufweist, zu einem Modul, das einen weniger hohen Ladezustand aufweist, zu ermöglichen.

11. Stromversorgungssystem (1) nach einem der vorhergehenden Ansprüche, wobei jeder der Zweige eine Schmelzsicherung (28) enthält, die mit einem der Elemente (22) zum Speichern elektrischer Energie und mit einem Rheostaten (312) in Reihe geschaltet ist, wobei der Unterbrechungsschwellenwert der Schmelzsicherung höher als der Schutzschwellenwert ist.

12. Stromversorgungssystem (1) nach einem der vorhergehenden Ansprüche, das ein Schutzgehäuse (6) umfasst, in dem die Eingangsanschlüsse (303a, 304a, 303b, 304b) der Zwischenverbindungsschnittstelle (3) aufgenommen sind, wobei das Schutzgehäuse (6) die Speichermodule (2) gleitend in der Weise führt, dass sich die Verbindungsanschlüsse (23, 24) eines Speichermoduls am Ende der Gleitbahn mit einem entsprechenden Paar Eingangsanschlüsse der Zwischenverbindungsschnittstelle (3) verbinden.

13. Stromversorgungssystem nach einem der vorhergehenden Ansprüche, wobei die Module ein Gehäuse (210b) enthalten, in dem das Element (220b) zum Speichern elektrischer Energie entnehmbar aufgenommen ist, wobei das Speicherelement elektrochemische Zellen und eine Steuervorrichtung (26b) für diese Zellen enthält, wobei das Gehäuse eine Überwachungsvorrichtung (200b) und eine Anschaltung, die das Speicherelement mit den beiden Verbindungsanschlüssen mit entgegengesetzten Polaritäten des Moduls elektrisch verbindet, enthält, wobei:
- die Steuervorrichtung programmiert ist, um eine Funktionalität auszuführen, die gewählt ist aus: Messen der Spannung und der Temperatur der elektrochemischen Zellen, Schützen der Zellen vor einem übermäßigen Lade- oder Entladestrom im Fall einer zu hohen oder zu niedrigen Spannung einer elektrochemischen Zelle und Ausgleichen der Spannungen der Zellen;
- die Überwachungsvorrichtung programmiert ist, um eine Funktionalität auszuführen, die gewählt ist aus: Messen des Stroms, der durch das Speicherelement fließt, Berechnen der verbleibenden Energie in dem Speicherelement, Berechnen der Lade-/Entladeleistung des Speicherelements und Aufzeichnen von Verwendungsdaten des Moduls.

## Claims

1. Electrical power supply system (1) with alterable capacity, comprising:
- at least two electrical energy storage modules (2), each comprising two connection terminals of opposite polarities and an electrical energy storage element connected between the two terminals;
- an interconnection interface (3), exhibiting:
- at least two pairs of input terminals, each pair being connected in a removable manner to the connection terminals of a respective storage module;
- two output terminals (301,302) for the power supply of an electric load (4, 5), the interconnection interface forming at least two branches connected in parallel between the two output terminals, each branch including one of the said electrical energy storage elements;
**Characterized in that**:
- each of the said branches formed by the interconnection interface includes a rheostat connected in series with the electrical energy storage element of the branch;
- the interconnection interface comprises a device for measuring the current passing through each of the said branches;
- the interconnection interface comprises a control circuit controlling the resistance of the rheostat of each of the said branches as a function of the measured current, so as to maintain the intensity passing through it below a protection threshold.

2. Electrical power supply system (1) according to Claim 1, in which the said electrical energy storage elements (22) are electrochemical accumulators.

3. Electrical power supply system according to Claim 2, in which the said electrochemical accumulators are of LiFePO₄ type.

4. Electrical power supply system (1) according to any one of the preceding claims, in which each of the said rheostats (312) is included in the interconnection interface (3) and is connected between a respective input terminal (303) and an output terminal (301).

5. Electrical power supply system according to any one of the preceding claims, in which each of the said rheostats comprises a MOS transistor (313) whose resistance is defined by the application of a gate/source voltage by the control circuit (310).

6. Electrical power supply system according to Claim 5, in which each of the said rheostats comprises two MOS transistors (313, 314) connected head-to-tail in series, the resistance of each of the said two transistors being defined by the application of a gate/source voltage by the control circuit (310).

7. Electrical power supply system according to any one of the preceding claims, including a thermal dissipater (334), two thermal absorption elements (332) coupled thermally to the thermal dissipater (334), each thermal absorption element (332) being coupled thermally to a respective rheostat.

8. Electrical power supply system according to Claims 5 and 7, in which the thermal absorption elements (334) are thermally coupled to the thermal dissipater (332) by way of a thermally conducting and electrically insulating layer.

9. Electrical power supply system according to any one of the preceding claims, in which the said control circuit (310) is configured to maintain the intensity passing through a rheostat (312) below a first protection threshold when the latter is traversed by a discharge current of the associated module and to maintain the intensity passing through the rheostat below a second protection threshold when the latter is traversed by a charge current, the first and second protection thresholds being different.

10. Electrical power supply system according to any one of the preceding claims, in which the said control circuit (310) is configured to allow the discharge of a module (2) exhibiting a higher state of charge towards a module exhibiting a lower state of charge in the absence of electric load (5) connected to the output terminals (301, 302) of the interconnection interface (3).

11. Electrical power supply system (1) according to any one of the preceding claims, each of the said branches including a fuse (28) connected in series with one of the said electrical energy storage elements (22) and a rheostat (312), the cut-out threshold of the fuse being greater than the said protection threshold.

12. Electrical power supply system (1) according to any one of the preceding claims, comprising a protection casing (6) in which the input terminals (303a, 304a, 303b, 304b) of the interconnection interface (3) are housed, the protection casing (6) guiding the said storage modules (2) by sliding so that the connection terminals (23, 24) of a storage module at the extremity of its sliding travel connects to a respective pair of input terminals of the interconnection interface (3).

13. Electrical power supply system according to any one of the preceding claims, in which the said modules include a casing (210b) in which the said electrical energy storage element (220b) is housed in a removable manner, the said storage element including electrochemical cells and a management device (26b) for these cells, the said casing including a supervision device (200b) and a connection facility electrically connecting the said storage element to the said two connection terminals of opposite polarities of the module, in which:
- the management device is programmed to implement a functionality from among the measurement of voltage and temperature of the electrochemical cells, the making safe of the cells in case of excessive charge or discharge current, in case of too high or too low voltage of an electrochemical cell, the balancing of the voltages of the cells;
- the supervision device is programmed to implement a functionality from among the measurement of the current passing through the storage element, the calculation of the remaining energy in the storage element, the calculation of the charge/discharge power of the storage element, the recording of the module's usage data.
